**Europäisches Patentamt**

**European Patent Office**

**Office européen des brevets**

(11) Veröffentlichungsnummer: **0 086 435**
**A1**

(12) # EUROPÄISCHE PATENTANMELDUNG

(21) Anmeldenummer: **83101158.0**

(22) Anmeldetag: **07.02.83**

(51) Int. Cl.³: **B 01 D 53/04**

(30) Priorität: **16.02.82 DE 3205451**

(43) Veröffentlichungstag der Anmeldung: **24.08.83**
**Patentblatt 83/34**

(84) Benannte Vertragsstaaten: **AT BE CH DE FR GB IT LI NL**

(71) Anmelder: **Linde Aktiengesellschaft, Abraham-Lincoln-Strasse 21, D-6200 Wiesbaden (DE)**

(72) Erfinder: **Asztalos, Stefan, Dipl.-Ing., Noestrasse 20, D-8000 München 71 (DE)**

(74) Vertreter: **Schaefer, Gerhard, Dr., Linde Aktiengesellschaft Zentrale Patentabteilung, D-8023 Höllriegelskreuth (DE)**

(54) **Verfahren zum Betreiben einer zyklisch arbeitenden Druckwechsel-Adsorptionsanlage.**

(57) Es wird ein Verfahren zum Betreiben einer zyklisch arbeitenden Druckwechsel-Adsorptionsanlage zur Reinigung und Zerlegung von Gasen mit mehreren Adsorbern beschrieben, in denen jeweils innerhalb eines Zyklus die Schritte, Adsorption, Entspannung bzw. Druckausgleich, Spülen und Druckaufbau durchgeführt werden, wobei als Spülgas bei der Entspannung von Adsorbern freiwerdendes Restgas verwendet und der Druckaufbau mindestens teilweise durch Einpressen von Produktgas vorgenommen wird.

Bei Ausfall des oder der das Spülgas liefernden Adsorber wird das Produktgas nicht nur zum Druckaufbau, sondern auch zum Spülen eines oder mehrerer anderer Adsorber verwendet und die Spülgasmenge dabei so geregelt, daß der oder die im Druckaufbau befindlichen Adsorber innerhalb eines vorher festgelegten Zeitraumes den Adsorptionssolldruck erreichen.

0086435

## Verfahren zum Betreiben einer zyklisch arbeitenden Druckwechsel-Adsorptionsanlage

Die Erfindung betrifft ein Verfahren zum Betreiben einer zyklisch arbeitenden Druckwechsel-Adsorptionsanlage zur Reinigung und Zerlegung von Gasen mit mehreren Adsorbern, in denen jeweils innerhalb eines Zyklus die Schritte Adsorption, Entspannung bzw. Druckausgleich, Spülung und Druckaufbau durchgeführt werden, wobei als Spülgas bei der Entspannung von Adsorbern freiwerdendes Restgas verwendet und der Druckaufbau mindestens teilweise durch Einpressen von Produktgas vorgenommen wird.

Zur Reinigung und Zerlegung von Gasen, beispielsweise zur Reinigung von Erdgas oder zur Zerlegung von Edelgasen, Luft, Stadtgasen, Spaltgasen, wasserstoffreichen Gasgemischen oder gasförmigen Kohlenwasserstoffen werden wegen ihrer Wirtschaftlichkeit und ihrer Effektivität häufig Adsorptionsverfahren eingesetzt. Ganz besonders bewährt haben sich dabei die Druckwechsel-Adsorptionsverfahren, bei denen die Desorption bzw. Regenerierung durch Drucksenkung über dem beladenen Adsorbens bewerkstelligt wird. Die Desorption wird dabei in ihren letzten Stadien oftmals durch Anwendung eines Spülgases vervollständigt. Die bei der Druckentlastung

Form. 5729 7.78

eines beladenen Adsorbers freiwerdenden Gase werden außerdem meist mehr oder weniger vollständig zur Druckerhöhung in anderen Adsorbern, die sich auf einem niedrigeren Druckniveau befinden, eingesetzt.

So ist beispielsweise aus der DE-OS 26 24 346 bekannt, zur Reinigung bzw. Zerlegung einiger der eingangs genannten Gasgemische Druckwechsel-Adsorptionsanlagen einzusetzen, die mit bis zu 9 Adsorbern bestückt sind. An die bei höherem Druck vorgenommene Adsorption schließen sich bei dem bekannten Verfahren mehrere Entspannungsschritte an, durch die zunächst das in den Hohlräumen des Adsorptionsmittels befindliche Gas, später aber auch adsorbierte Komponenten freigesetzt werden. Die ersten Entspannungsschritte werden durch Druckausgleich mit anderen, auf niedrigeren Drücken befindlichen Adsorbern durchgeführt, die auf diese Weise wieder auf einen gewissen Druck gebracht werden. Nur das bei der letzten Entspannungsstufe anfallende Gas wird als Restgas abgezogen, woran sich eine Gegenstromspülung anschließt, um möglichst alle adsorbierten Komponenten aus dem Adsorber zu entfernen. Als Spülgas werden dabei bei der Druckerniedrigung von Adsorbern anfallende Gase verwendet. In einer Anzal von Druckaufbauschritten, zum großen Teil durch Druckausgleich mit anderen, auf höheren Drücken befindlichen Adsorbern, wird der Druck dann im desorbierten Adsorber wieder erhöht, wobei die letzte Druckerhöhung auf Adsorptionsdruck mit Produktgas erfolgt.

An die Adsorber, Leitungen und Ventile werden bei derartigen Anlagen hohe Anforderungen infolger schneller Wechsel der Drücke und Gasflüsse gestellt. Obwohl dieser Tatsache bei der Auslegung solcher Anlagen Rechnung getragen wird, kommt es doch mitunter zu Schäden und Ausfällen von Adsorbern, beispielsweise des oder der das Spülgas liefernden Adsorber, die sich in der Regel als Druckverluste in den Adsorbern und im Leitungssystem äußern und die es notwendig machen, die Anlage stillzulegen. Dies bringt erhebliche wirtschaftliche Nachteile mit sich, insbesondere, wenn die in dem Adsorptionsverfahren gewonnenen Fraktionen in stetiger Menge an andere, ebenfalls kontinuierlich arbeitende Anlagen zur Weiterverarbeitung abgegeben werden.

Es ist deshalb die Aufgabe der vorliegenden Erfindung, ein Verfahren und eine Vorrichtung zu schaffen, die es ermöglichen, eine Druckwechsel-Adsorptionsanlage auch bei Ausfall des oder der das Spülgas liefernden Adsorber weiterzufahren, so daß insgesamt ein vollständig kontinuierlicher Betrieb gewährleistet ist.

Diese Aufgabe wird erfindungsgemäß dadurch gelöst, daß bei Ausfall des oder der das Spülgas liefernden Adsorber das Produktgas nicht nur zum Druckaufbau, sondern auch zum Spülen eines oder mehrerer anderer Adsorber verwendet wird und daß die Spülgasmenge dabei so geregelt wird, daß der oder die im Druckaufbau befindlichen Adsorber innerhalb eines vorher festgelegten Zeitraums den Adsorptionssolldruck erreicht.

Demgemäß werden also der oder die das Spülgas liefernden Adsorber durch Spülen mit Produktgas ersetzt, während gleichzeitig in einem oder mehreren anderen Adsorbern mit Hilfe des Produktgases der Adsorptionsdruck aufgebaut wird. Der Druckaufbau muß dabei, um die Taktfolge des Adsorptionsverfahrens zu gewährleisten, innerhalb eines bestimmten, vorher festgelegten Zeitraumes erfolgen. Um dies sicherzustellen, wird gemäß einer bevorzugten Ausgestaltung des Erfindungsgedankens bei Nichterreichen des Adsorptionssolldruckes die Spülgasmenge für den oder die zu spülenden Adsorber gedrosselt bzw. bei Erreichen des Adsorptionssolldruckes die Spülgasmenge erhöht. Das bedeutet, daß bei Nichterreichen des Adsorptionssolldruckes mehr Produktgas für den Druckaufbau und weniger für das Spülen und bei Erreichen des Adsorptionssolldruckes umgekehrt weniger Produktgas für den Druckaufbau und mehr für das Spülgas verwendet wird. Diese Reinigung ist nur von einem Computer durchzuführen, da der Sollwert des Druckes eine zeitabhängige Funktion ist. Darüber hinaus wird zur Messung des momentanen Druckes (Istwertmessung) je nach Takt ein anderer Adsorber herangezogen.

Die Erfindung betrifft überdies eine Vorrichtung zur Durchführung des Verfahrens mit mehreren Adsorbern, die dadurch gekennzeichnet ist, daß jeder Adsorber mit je einem Druckmeßfühler versehen ist und daß jeder Druckmeßfühler mit jeweils einem einem anderen Adsorber zugeordneten Steuerventil in der Weise verbunden ist, daß das Steuerventil in Abhängigkeit von dem vom Druckmeßfühler gemessenen momentanen Druck die Spülgasmenge regelt.

Das erfindungsgemäße Verfahren und die Vorrichtung lassen sich bei allen Druckwechsel-Adsorptionsanlagen einsetzen, wenn der oder die das Spülgas liefernden Adsorber ausgefallen sind. Es bietet dadurch die Möglichkeit, bei einer Druckwechsel-Adsorptionsanlage mit vier Adsorbern, bei der sich ein Adsorber in Adsorption befindet, nach Ausfall des das Spülgas liefernden Adsorbers auf ein Taktschema mit nur drei Adsorbern (ebenfalls ein Adsorber in Adsorption) umzuschalten. Dadurch wird die Verfügbarkeit von Adsorptionsanlagen noch weiter erhöht.

Das erfindungsgemäße Verfahren sei nunmehr anhand von zwei schematisch dargestellten Ausführungsbeispielen näher erläutert.

Dabei zeigen:

Form. 5729 7.78

Figur 1        eine Adsorptionsanlage mit drei Adsorbern
               in einem bestimmten Takt

Figur 2        ein Zeit-Druck-Diagramm

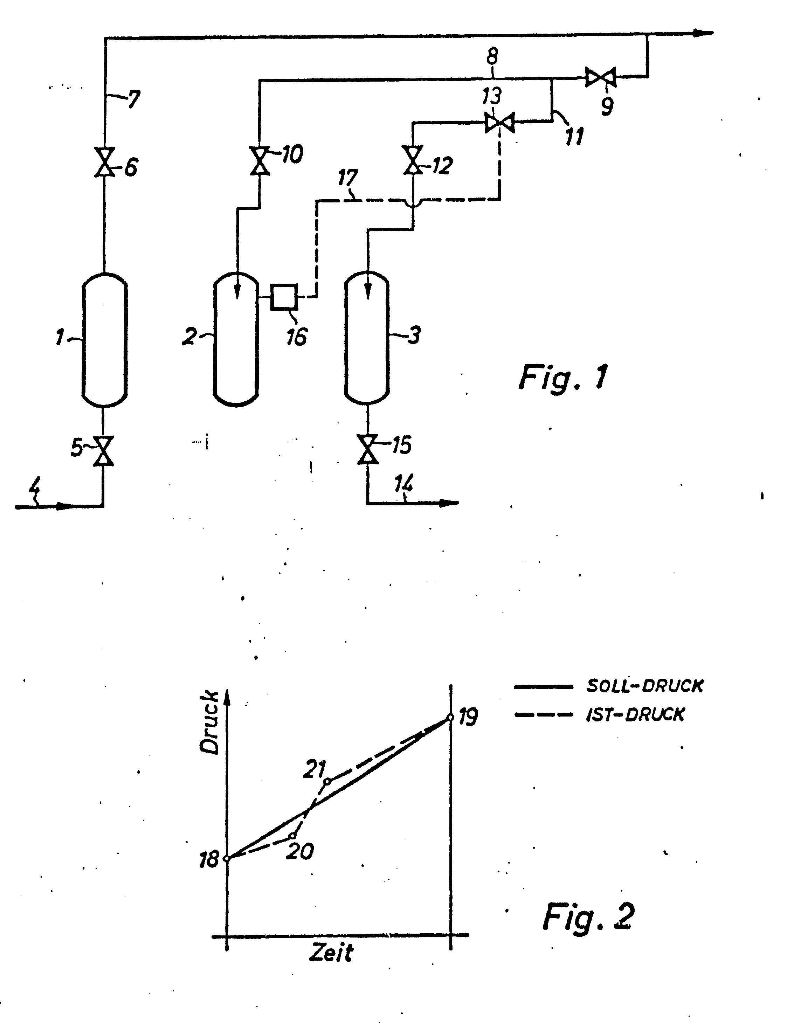

In Figur 1 ist eine Druckwechsel-Adsorptionsanlage mit
drei Adsorbern 1,2,3 in einer Momentaufnahme in einem
beliebigen Takt dargestellt, so daß alle in diesem Takt
unwichtigen Leitungen und Ventile der Übersicht halber
weggelassen sind. In dem dargestellten Takt befindet sich
der Adsorber 1 in Adsorption und der Adsorber 2 im Druckaufbau und Adsorber 3 wird gespült.

Über Leitung 4 mit Ventil 5 gelangt Rohgas in den Adsorber 1.
Dort werden die leicht adsorbierbaren Komponenten festgehalten, während die schwerer adsorbierbaren Komponenten
die Anlage über ein Ventil 6 und Leitung 7 verlassen.

Zur gleichen Zeit wird in dem Adsorber 2, der nach der
Adsorption leicht adsorbierbarer Komponenten einer Regenerierung, d.h. Drucksenkung, und anschließender Spülung,
unterworfen wurde, nunmehr der Druck aufgebaut, wozu über
Leitung 8 mit Ventilen 9 und 10 Produktgas in diesen Adsorber eingepreßt wird.

Adsorber 3 wird nach bereits erfolgter Adsorption leicht
adsorbierbarer Komponenten und Drucksenkung in diesem
Augenblick gespült. Dabei sei vorausgesetzt, daß der oder
die das Spülgas liefernden Adsorber ausgefallen sind.
Aus diesem Grunde wird erfindungsgemäß Produktgas über eine
Stichleitung 11 mit Ventil 12 und Steuerventil 13 zum
Spülen des Adsorbers 3 verwendet. Über Leitung 14 mit
Ventil 15 wird dabei das sich ausbildende Gasgemisch abgezogen und beispielsweise einem nichtdargestellten Ausgleichsbehälter zugeführt.

0086435

Bei der dargestellten Momentaufnahme ist der Adsorber 2 mit einem Druckmeßfühler 16 versehen, der über eine elektrische Leitung 17 mit dem Steuerventil 13 für Adsorber 3 verbunden ist.

Die Arbeitsweise des Steuerventils 13 in Abhängigkeit von dem in Adsorber 2 gemessenen Druck ist in dem Diagramm der Figur 2 erläutert, in dem auf der Ordinate der Druck gegen die Zeit als Abszisse aufgetragen ist. Mit 18 ist dabei der Anfang und mit 19 der Enddruck während des Druckaufbaus in Adsorber 2 bezeichnet. Die durchgezogene Linie bezieht sich auf den geforderten Solldruck und die gestrichelte Linie auf den tatsächlichen Istdruck.

Mißt der Druckfühler 16 in dem Adsorber 2 einen Druck, der unterhalb des geforderten Solldruckes liegt, 20, (Istdruck < Solldruck), so geht über einen nichtdargestellten Computer und über Leitung 17 ein entsprechendes Signal an das Steuerventil 13, so daß dieses angedrosselt wird. Dadurch gelangt mehr Produktgas in den Adsorber 2 und der Adsorberdruck erhöht sich, während gleichzeitig die Spülgasmenge in dem Adsorber 3 verringert wird. Liegt dagegen der vom Meßfühler 16 aufgenommene Istwert über dem geforderten Sollwert des Druckes, 21, (Istdruck > Solldruck), so wird das Steuerventil 13 geöffnet und dadurch mehr Produktgas zum Spülen in den Adsorber 3 und weniger Produktgas zum Druckaufbau in den Adsorber 2 geleitet. Auf diese Weise kann beispielsweise bei Umschaltung einer Druckwechsel-Adsorptionsanlage mit vier Adsorbern auf drei Adsorber (ein Adsorber in Adsorption) der das Spülgas liefernde Adsorber durch Spülen mit Produktgas ersetzt und weiterhin eine kontinuierliche Verfahrensweise gewährleistet werden.

Es liegt für den Fachmann auf der Hand, daß bei vollständiger Darstellung der Adsorptionsanlage an jeden Adsorber drei, den Leitungen 7, 8 und 11 mit Ventilen 6, 10, 12 und 13 entsprechende Leitungen sowie Meßfühler und elektrische Leitungen zu den jeweiligen Steuerventilen angeschlossen sind, so daß jeder Adsorber nacheinander und zeitlich gegen die anderen verschoben die Schritte Adsorption, Druckausgleich, Spülen und Druckaufbau durchläuft, und die Anlage insgesamt einen kontinuierlich fließenden Produktgasstrom liefert.

<u>Patentansprüche</u>

1. Verfahren zum Betreiben eine zyklisch arbeitenden Druckwechsel-Adsorptionsanlage zur Reinigung und Zerlegung von Gasen mit mehreren Adsorbern, in denen jeweils innerhalb eines Zyklus die Schritte Adsorption, Entspannung bzw. Druckausgleich, Spülung und Druckaufbau durchgeführt werden, wobei als Spülgas bei der Entspannung von Adsorbern freiwerdendes Restgas verwendet und der Druckaufbau mindestens teilweise durch Einpressen von Produktgas vorgenommen wird, dadurch gekennzeichnet, daß bei Ausfall des oder der das Spülgas liefernden Adsorber das Produktgas nicht nur zum Druckaufbau, sondern auch zum Spülen eines oder mehrerer anderer Adsorber verwendet wird und daß die Spülgasmenge dabei so geregelt wird, daß der oder die im Druckaufbau befindlichen Adsorber innerhalb eines vorher festgelegten Zeitraumes den Adsorptionssolldruck erreichen.

2. Verfahren nach Anspruch 1, dadurch gekennzeichnet, daß bei Nichterreichen des Adsorptionssolldruckes die Spül-gasmenge gedrosselt wird.

Form. 5729 7.78

0086435

3. Verfahren nach Anspruch 1, dadurch gekennzeichnet, daß bei Erreichen des Adsorptionssolldruckes die Spülgasmengen erhöht wird.

4. Vorrichtung zur Durchführung des Verfahrens nach einem der Ansprüche 1 bis 3 mit mehreren Adsorbern, dadurch gekennzeichnet, daß jeder Adsorber mit je einem Druckmeßfühler mit jeweils einem anderen Adsorber zugeordneten Steuerventil in der Weise verbunden ist, daß das Steuerventil in Abhängigkeit von dem vom Druckmeßfühler gemessenen momentanen Druck die Spülgasmenge regelt.

BAD ORIGINAL

Fig. 1

Fig. 2

Europäisches
Patentamt

**EUROPÄISCHER RECHERCHENBERICHT**

0086435

Nummer der Anmeldung

EP    83 10 1158

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 006 138  (BAYER ANTWERPEN N.V.) <br> * Anspruch 1;  Seite 11, Zeilen 4-18 * <br><br> --- | 1 | B 01 D  53/04 |
| A | EP-A-0 011 872  (LINDE AG) <br> * Anspruch 1 * <br><br> --- | 1 | |
| A | DE-A-1 919 557  (UNION CARBIDE CORP.) <br> * Ansprüche  1,  8,  9,  12, 19; Seite  34,  Zeile  7  - Seite 37, Zeile 15 * <br><br> ----- | 1,4 | |

RECHERCHIERTE
SACHGEBIETE (Int. Cl. ³)

B 01 D  53/00

Der vorliegende Recherchenbericht wurde für alle Patentansprüche erstellt.

| Recherchenort <br> BERLIN | Abschlußdatum der Recherche <br> 06-04-1983 | Prüfer <br> BERTRAM H E H |
|---|---|---|